# EUROPEAN PATENT APPLICATION

(11) **EP 2 568 465 A1**
(43) Date of publication of application: **13.03.2013**
(21) Application number: 11797907.0
(22) Date of filing: 21.04.2011
(51) Int. Cl.: G09F 9/00, G02F 1/1335

(54) **DISPLAY PANEL AND DISPLAY DEVICE**

(30) Priority: 22.06.2010 JP 2010141745
(71) Applicant: Sharp Kabushiki Kaisha, Osaka-shi, Osaka 545-8522 (JP)
(72) Inventor: KURIYAMA Toru, Osaka 545-8522 (JP)
(74) Representative: Müller-Boré & Partner Patentanwälte
(86) International application number: PCT/JP2011/059791
(87) International publication number: WO 2011/162019

(57) **Abstract**

A display panel (4) is a display panel having a light-shield tape strip (21) and a light-shield tape strip (22), both light-shield tape strips are attached to the inside of the perimeter of the display panel (4). A first edge (21a) is formed at an end of the light-shield tape strip (21) of the display panel (4), and a second edge (22a) is formed at an end of the light-shield tape strip (22) of the display panel (4) so as to face the first edge (21a). The first edge (21a) and the second edge (22a) of the display panel (4) are shaped so as to be engaged with each other at least partly.

## Description

### Technical Field

The present invention relates to a display panel and a display device that can reduce leak light and entrance of foreign matters.

### Background Art

In the technical field of liquid crystal display device, for the purpose of improving visibility and sealing performance, a structure of attaching a light-shield tape or a double-sided adhesive tape and the like to the inside of a perimeter of a liquid crystal display panel has been employed. In particular, regarding a liquid crystal display device that is called IA (Industrial Appliance) model and used for industrial equipment such as ATM, such a device is required to have adaptability and durability with respect to the application environment, and thus there is a necessity of maintaining its visibility and sealing performance for a long time.

For example, a known display device has a backlight for a display unit and is held on the back by a holder having a frame. A light beam from the backlight may enter a clearance generated between the display device and the frame of the holder. In order to prevent loss of the light, a reflective light-shield tape is bonded to bridge over the clearance (see for example Patent document 1).

### Prior Art Documents

### Patent documents

Patent document 1: Utility Model Application S63-11682

### Disclosure of Invention

### Problem to be Solved by the Invention

In a liquid crystal display device or the like, there is a necessity of preventing light of the backlight from leaking to the entire display unit. In such a case, it is required to attach a light-shield tape over the entire margin of a display panel. It is possible to shield light by using a light-shield tape that has been molded as one rectangular piece. However, use of a rectangular light-shield tape adapted to the liquid crystal display panel raises the cost for producing the device (including the price of the tape and the working steps).

Alternatively, it is possible to bond serially a plurality of light-shield tape strips so as to prepare a rectangular light-shield tape. In this case, since a light-shield tape for general purpose can be used, the cost for producing the device can be suppressed. However, when the ends of the plural light-shield tapes are overlapped with each other, the light-shield tape and the case may interact with each other if there is no substantial clearance between the liquid crystal display panel and the case. Another problem is that when used in a hot and humid environment, the tape will be peeled off easily from the overlapped part.

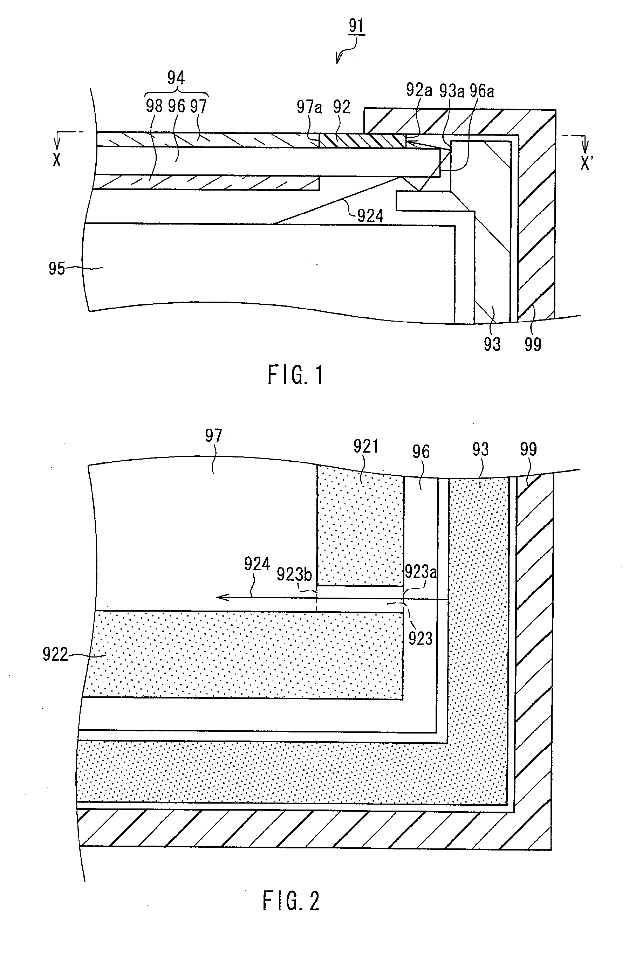

FIG. 1 is a cross-sectional view showing a liquid crystal display device 91 comprising a liquid crystal display panel 94 incorporated into a frame. The liquid crystal display device 91 holds a liquid crystal display panel 94 in a case 99 and a chassis 93 both of which constitute the frame. Below the liquid crystal display panel 94, a light-emitting member 95 including a diffusion sheet, a backlight and the like is provided.

The liquid crystal display panel 94 has a polarizing plate 97 on the upper surface of a liquid crystal display panel 96 and a polarizing plate 98 on the lower surface of the liquid crystal display panel 96. An edge 97a of the polarizing plate 97 is located inside of an edge 96a of the liquid crystal display panel 96. On the upper surface of the liquid crystal display panel 96, a light-shield tape 92 is attached to the outside the edge 97a of the polarizing plate 97. For example, PET (polyethylene terephthalate) tape can be used as the light-shield tape 92.

As shown in FIG. 1, a backlight beam 924 from the light-emitting member 95 may pass through the end of the liquid crystal panel 96, be reflected by a wall surface 93a of the chassis 93 and enter a side surface 92a of the light-shield tape 92. In this case, as the light-shield tape 92 is in close contact with the case 99 and the liquid crystal panel 96, light may leak rarely from the upper surface or the lower surface of the light-shield tape 92.

However, in a case of bonding a light-shield tape 92 composed of a plurality of light-shield tape strips, a clearance may be generated at the joint of the ends of the light-shield tape strips. In this case, leak light may occur due to the backlight beam 924 entering the clearance.

FIG. 2 is a cross-sectional view taken along a line X-X' of the liquid crystal display device 91 in FIG. 1. FIG. 2 shows an example of attachment of a light-shield tape strip 921 and a light-shield tape strip 922. A clearance 923 may be generated between the light-shield tape strip 921 and the light-shield tape strip 922 inside of the perimeter of the liquid crystal panel 96. If such a clearance 923 is generated, the backlight beam 924 that has entered from the outer part 923a (indicated with a broken line) of the clearance 923 will pass through the clearance 923 to the inner part 923b (indicated with the broken line), and it causes leak light toward the upper surface of the polarizing plate 97 that constitutes the liquid crystal display panel 94. Furthermore, from the upper surface of the polarizing plate 97 that constitutes the liquid crystal display panel 94, foreign matters may enter the space between the liquid crystal panel 96 and the light-emitting member 95 through the clearance 923 between the light-shield tape strip 921 and the light-shield tape strip 922. If such foreign matters enter, the luminance of the light-emitting member 95 is lowered and further the image quality of the liquid crystal display panel 94 is degraded.

Therefore, with the foregoing in mind, it is an object of the present invention to provide a display panel and a display device that can reduce leak light and entrance of foreign matters.

### Means for Solving Problem

For achieving the above-mentioned object, a display panel as disclosed below is prepared by attaching a tape member to the inside of the perimeter, where a first edge is formed at a first end of the tape member, a second edge is formed at a second end of the tape member so as to face the first edge, and the first edge and the second edge are shaped to be engaged with each other at least partly.

### Effects of the Invention

As mentioned above, since the first edge and the second edge of the tape member in the display panel of the present invention are shaped to be engaged with each other, the present invention can provide an effect of reducing leak light and entrance of foreign matters.

### Brief Description of Drawings

[FIG. 1] FIG. 1 is a cross-sectional view showing a liquid crystal display device having a liquid crystal display panel incorporated into a frame.
[FIG. 2] FIG. 2 is a cross-sectional view showing the liquid crystal display device 1 of FIG. 1 taken along a line X-X'.
[FIG. 3] FIG. 3 is a cross-sectional view showing a liquid crystal display device 1 having a liquid crystal display panel 4 incorporated into a frame.
[FIG. 4] FIG. 4 is a view showing an example of attachment of a light-shield tape strip 21 and a light-shield tape strip 22 in the liquid crystal display device 1.
[FIG. 5A] FIG. 5A is a view showing a variation of attachment of a light-shield tape strip 21 and a light-shield tape strip 22 in the liquid crystal display device 1.
[FIG. 5B] FIG. 5B is a view showing another variation of attachment of a light-shield tape strip 21 and a light-shield tape strip 22 in the liquid crystal display device 1.
[FIG. 5C] FIG. 5C is a view showing further a variation of attachment of a light-shield tape strip 21 and a light-shield tape strip 22 in the liquid crystal display device 1.
[FIG. 5D] FIG. 5D is a view showing further a variation of attachment of a light-shield tape strip 21 and a light-shield tape strip 22 in the liquid crystal display device 1.
[FIG. 6A] FIG. 6A is a schematic view for showing a process of producing the liquid crystal display device 1.
[FIG. 6B] FIG. 6B is a schematic view for showing a process of producing the liquid crystal display device 1.
[FIG. 6C] FIG. 6C is a schematic view for showing a process of producing the liquid crystal display device 1.
[FIG. 7A] FIG. 7A is a cross-sectional view showing the liquid crystal display device 1 having a liquid crystal display panel 4 incorporated into a frame.
[FIG. 7B] FIG. 7B is a cross-sectional view showing a liquid crystal display device 1 of FIG. 7A taken along a line Y-Y'.
[FIG. 8A] FIG. 8A is a view for showing a variation of attachment of a light-shield tape or a double-sided adhesive tape.
[FIG. 8B] FIG. 8B is a view for showing a variation of attachment of a light-shield tape or a double-sided adhesive tape.
[FIG. 8C] FIG. 8C is a view for showing a variation of attachment of a light-shield tape or a double-sided adhesive tape.
[FIG. 8D] FIG. 8D is a view for showing a variation of attachment of a light-shield tape or a double-sided adhesive tape.
[FIG. 8E] FIG. 8E is a view for showing a variation of attachment of a light-shield tape or a double-sided adhesive tape.
[FIG. 9A] FIG. 9A is a view for showing a variation of attachment of a light-shield tape or a double-sided adhesive tape.
[FIG. 9B] FIG. 9B is a view for showing a variation of attachment of a light-shield tape or a double-sided adhesive tape.

### Description of the Invention

(1) A display panel of the present invention is a display panel including a tape member attached to the inside of a perimeter. A first edge is formed at a first end of the tape member, a second edge is formed at a second end of the tape member so as to face the first edge, and the first edge and the second edge are shaped to be engaged with each other at least partly. Thereby, leak light and entrance of foreign matters from the outside of the display panel can be reduced.

(2) In the display panel, it is preferable that the first edge protrudes at one part outward to form a convexity and the second edge is notched at one part inward to form a concavity, and the convexity and the concavity are shaped to be engaged with each other. In this case, leak light and entrance of foreign matters from the outside of the display panel can be reduced effectively.

(3) In the display panel, it is preferable that the convexity at the first edge and the concavity at the second edge are shaped to be engaged with each other at the entire first edge or at the entire second edge. In this case, leak light and entrance of foreign matters from the outside of the display panel can be reduced effectively.

(4) In the display panel, the first end and the second end may be attached so that a clearance generated between the first edge and the second edge is sized to prevent light that has entered from the outside of the display panel from traveling rectilinearly to the interior of the display panel. In this case, leak light and entrance of foreign matters from the outside of the display panel can be reduced even if any clearances have been generated.

(5) The display panel may be a quadrangle, and the first end and the second end may be attached at a corner of the margin of the display panel. In this case, leak light and entrance of foreign matters from the outside of the display panel can be reduced while decreasing the number of steps for attaching as much as possible by use of a rectilinear tape member for general purpose.

(6) In the display panel, the tape member may be a double-sided adhesive tape, and the display panel may be adhered to a chassis by use of the double-sided adhesive tape. In this case, it is possible to prevent foreign matters from entering a space between the liquid crystal display panel and the chassis.

(7) The display panel can be used for a display device.

Hereinafter, preferred embodiments of the display device according to the present invention will be described with reference to the attached drawings. The description below refers to examples where the present invention is applied to a liquid crystal display device.

### [1. First Embodiment]

### [1-1. Structure of liquid crystal display device]

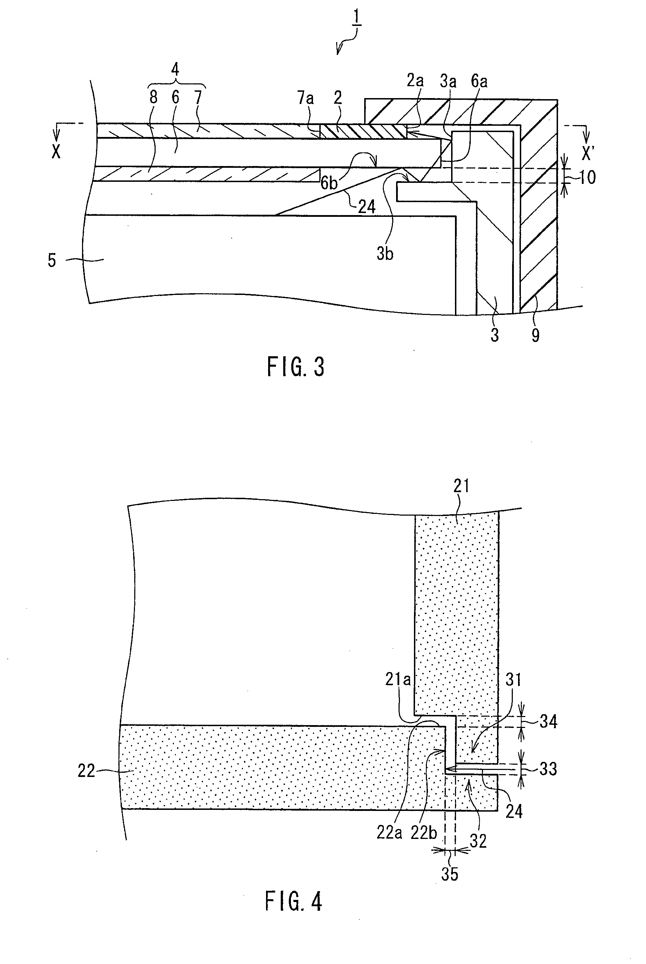

FIG. 3 is a cross-sectional view showing a liquid crystal display device 1 prepared by incorporating a liquid crystal display panel 4 into a frame. The liquid crystal display device 1 holds a liquid crystal display panel 4 inside a case 9 and chassis 3 both of which constitute the frame. Below the liquid crystal display panel 4, a light-emitting member 5 including a diffusion sheet, a backlight and the like is arranged.

The liquid crystal display panel 4 includes a liquid crystal panel 6, a polarizing plate 7 and a polarizing plate 8. In the liquid crystal display panel 4, the polarizing plate 7 is arranged on the upper surface of the liquid crystal panel 6, and the polarizing plate 8 is arranged on the lower surface of the liquid crystal panel 6. The polarizing plate 7 has an edge 7a located inside of an edge 6a of the liquid crystal panel 6. On the upper surface of the liquid crystal panel 6, a light-shield tape 2 is attached to surround the edge 7a of the polarizing plate 7. In the present embodiment, as the light-shield tape 2, a PET (polyethylene terephthalate) tape about 150 µm in thickness is used.

FIG. 4 shows an example of attachment of a light-shield tape strip 21 and a light-shield tape strip 22 in the liquid crystal display device 1 according to the present embodiment. Namely, FIG. 4 is a schematic view showing only the relation between the light-shield tape strip 21 and the light-shield tape strip 22 in the cross section taken along a line X-X' of FIG. 3.

As shown in FIG. 4, an edge 21a of the light-shield tape strip 21 is formed stepwise. Namely, the edge 21a is shaped non-linearly, at which a convexity 31 is formed when viewed from the planar direction (vertical direction on the drawing sheet).

On the other hand, the light-shield tape strip 22 has an edge 22a formed to face the edge 21a, and the edge 22a is shaped stepwise to be engaged with the edge 21a. Namely, the edge 22a is shaped non-linearly, at which a concavity 32 is formed when viewed from the planar direction (vertical direction on the drawing sheet). In other words, the convexity 31 at the edge 21a and the concavity 32 at the edge 22a are shaped to be engaged with each other.

Here, it is desirable that the light-shield tape strip 21 and the light-shield tape strip 22 are attached such that the edge 21a and the edge 22a are engaged with each other without a clearance therebetween. However, when the accuracy at the time of attaching deteriorates, a clearance may be generated between the edge 21a and the edge 22a.

In FIG. 4, a clearance 33, a clearance 34 and a clearance 35 are generated between the edge 21a and the edge 22a. These clearance 33, clearance 34 and clearance 35 are substantially the same in the size.

As shown in FIG. 4, the light-shield tape strip 21 and the light-shield tape strip 22 are attached so that the convexity 31 and the concavity 32 are engaged with each other. As a result, even when a backlight beam 24 that has been reflected by the wall surfaces 3b, 3a (FIG. 3) of the chassis 3 enters from the outside of the clearance 33 on the side surface 2a of the light-shield tape 2, the light will be shielded by the wall surface 22b of the edge 22a and thus rarely it will pass through the clearance toward the upper surface of the liquid crystal display panel 4.

In this case, the edge 21a and the edge 22a can be attached with a clearance so that the backlight beam 24 that has passed through the clearance 33 and entered from the outside of the liquid crystal display panel 4 will not travel rectilinearly toward the clearance 34 generated inside of the liquid crystal display panel 4.

In this case for example, when a black PET tape that provides a high photo-absorption effect is used as the light-shield tape, it is possible to reduce leak light caused by the further reflection by the wall surface 22b.

Further, in the liquid crystal display device 1 in the present embodiment, the edges of a plurality of light-shield tape strips are shaped to be engaged with each other. Therefore, leak light from the outside of the liquid crystal display panel 4 can be prevented and at the same time, entrance of foreign matters can be reduced. Specifically, it is possible to prevent foreign matters from entering the clearance between the lower surface of the liquid crystal display panel 4 and the light-emitting member 5, from the upper surface of the liquid crystal display panel 4 through the clearance 34 and the clearance 33.

### [1-2. Variation 1]

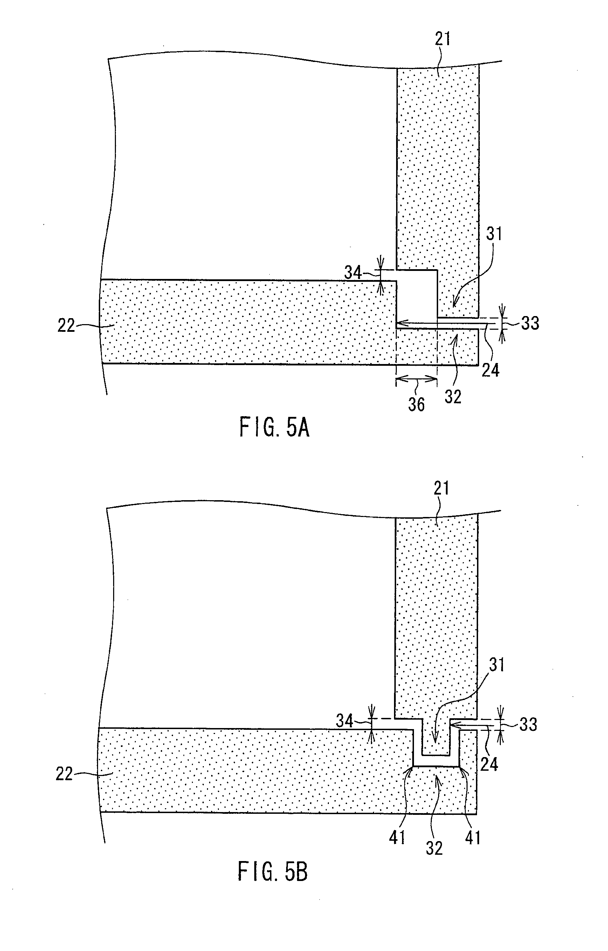

FIGs. 5A and 5B show a variation of attachment of the light-shield tape strip 21 and the light-shield tape strip 22 in the liquid crystal display device 1 as shown in FIG. 4. In FIG. 4, the convexity 31 at the edge 21a and the concavity 32 at the edge 22a are shaped to be engaged with each other with clearances of the same size (clearance 33, clearance 34 and clearance 35). Alternatively as shown in FIG. 5A, the convexity 31 at the edge 21a and the concavity at the edge 22a can be shaped to be engaged with each other in a more relaxed manner. For example, in FIG. 5A, an engagement is formed with a clearance 36 that is larger than the clearance 33 or the clearance 34. Even in this case, leak light and entrance of foreign matters can be reduced unless the backlight beam 24 travels rectilinearly toward the clearance 34.

It is also possible to shape the convexity 31 and the concavity 32 as a relief structure as shown in FIG. 5B. Namely, a convexity 31 is formed in the middle of the edge 21a and a concavity 32 is formed at the edge 22a to face the convexity 31. In the case as shown in FIG. 5B, the backlight beam 24 is required to be reflected repeatedly to pass through the clearance 34. However, since right-angle parts 41 exist in the clearance, the travel of light caused by repetition of reflection can be prevented, and thus leak light can be reduced more effectively.

The respective shapes of the convexity 31 and the concavity 32 are not limited to the above examples as long as they are shaped to be engaged with each other.

### [1-3. Variation 2]

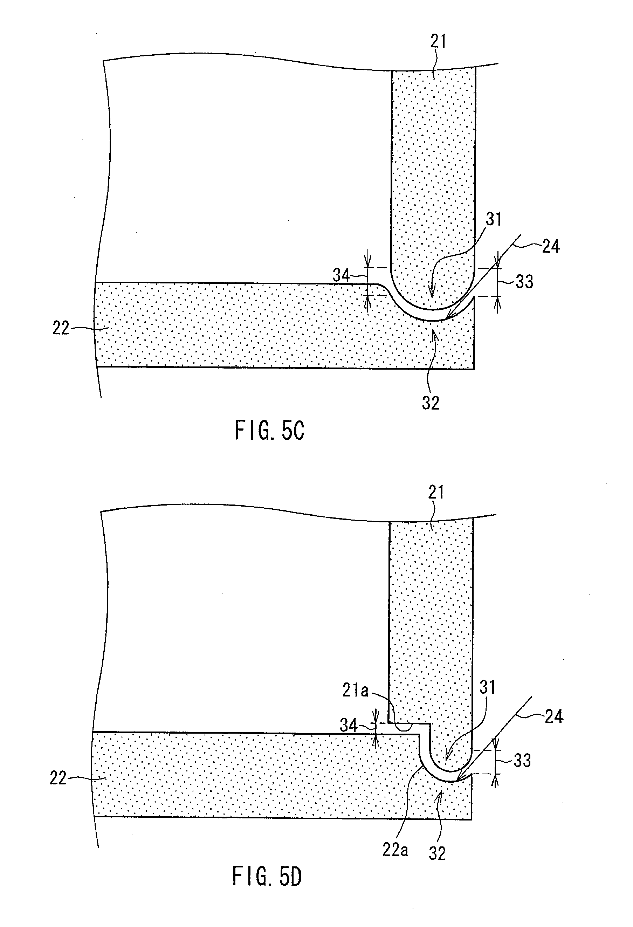

FIG. 5C and 5D show other variations of the light-shield tape strip 21 and the light-shield tape strip 22 in the liquid crystal display device 1 as shown in FIG. 4.

FIG. 4 shows an example where the convexity 31 and the concavity 32 have rectilinear corners. However, as shown in FIG. 5C, the convexity 31 and the concavity 32 may be shaped as curves. For example, in FIG. 5C, the backlight beam 24 that has entered from the clearance 34 is absorbed by the wall surface of the concavity 32. In this case, unless the backlight beam 24 travels rectilinearly toward the clearance 34, leak light can be reduced.

Furthermore, the convexity 31 and the concavity 32 may be curved partly as shown in FIG. 5D. Namely, the convexity 31 may be formed by curving a part of the edge 21a and a curved concavity 32 may be formed at the edge 22a so as to correspond to the convexity 31. In the case of FIG. 5D, the backlight beam 24 is required to be reflected repeatedly to pass through the clearance 34. However in FIG. 5D, since the clearance is shaped as a curve, the backlight beam 24 that has been reflected repeatedly is absorbed by the wall surface of the convexity 31 or the concavity 32. Thereby, it is possible to prevent the backlight beam 24 from traveling and to reduce the leak light effectively.

The shapes of the convexity 31 or the concavity 32 and the shapes of the edge 21a and the edge 22a are not limited to the above examples as long as they are shaped to be engaged with each other.

### [1-4. Method for producing liquid crystal display device]

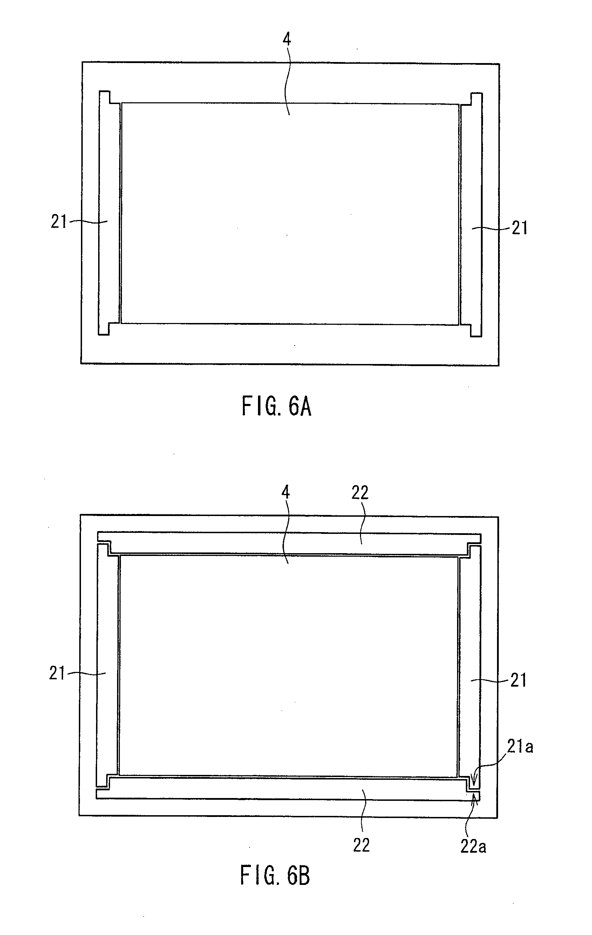

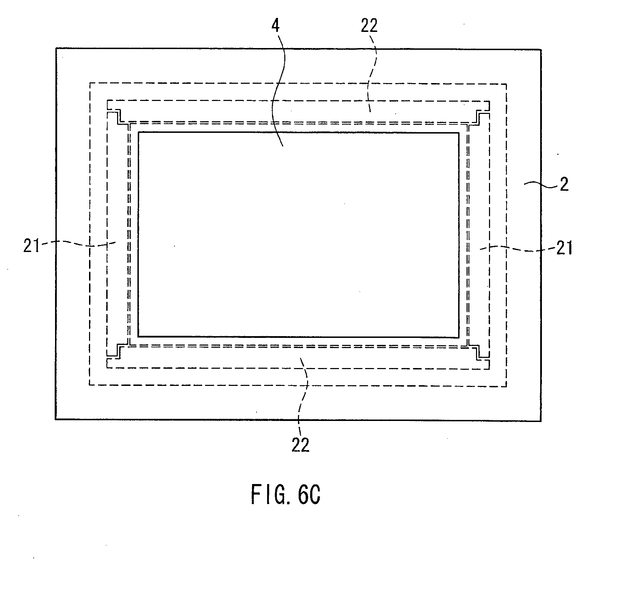

FIGs. 6A, 6B and 6C are schematic views for explaining the method for producing a liquid crystal display device 1 as shown in FIG. 3. First, as shown in FIG. 6A, light-shield tape strips 21 are bonded to parts (left and right sides in FIG. 6A) of the inside of the perimeter of the liquid crystal display panel 4.

Next, as shown in FIG. 6B, light-shield tape strips 22 whose edges have been shaped to be engaged with the edges 21a of the light-shield tape strip 21 are bonded to parts (upper and lower sides in FIG. 6B) of the inside of the perimeter of the liquid crystal display panel 4. As a result, the edges 21a and the edges 22a are bonded to the liquid crystal display device 4 in a state facing each other. The bonding may be carried out by hand or with a special purpose machine.

It is required that the edges 21a and the edges 22a be bonded not to be overlapped on a plane in order to avoid interaction of the overlapped parts on the case. Further, the edges 21a and the edges 22a are required to be bonded so that the size of the clearances does not exceed a predetermined range. If the clearance is too large, leak light due to the backlight from the margin of the liquid crystal display panel 4 would occur.

Next, as shown in FIG. 6C, the liquid crystal display panel 4 is incorporated into a case 2 so that the upper parts of the light-shield tape 21 and the light-shield tape 22 attached to enclose the inside of the perimeter of the liquid crystal display panel 4 will be in contact with the frame-shaped case 2, thereby manufacturing the liquid crystal display device 1.

Through the process as mentioned above, the above-mentioned liquid crystal display device 1 can be produced.

### [2. Second Embodiment]

### [2-1. Structure of liquid crystal display device]

In the above embodiment, the light-shield tape 2 is bonded to prevent leak light or entrance of foreign matters in the space between the liquid crystal display panel 4 and the chassis 3 (FIG. 3). Further in FIG. 3, for the purpose of preventing foreign matters (e.g., dirt and dust) from entering through the clearance 10 between the lower surface 6b of the liquid crystal display panel 4 and an attachment surface 3b of the chassis 3, a double-sided adhesive tape may be bonded to the area between the liquid crystal display panel 4 and the chassis 3.

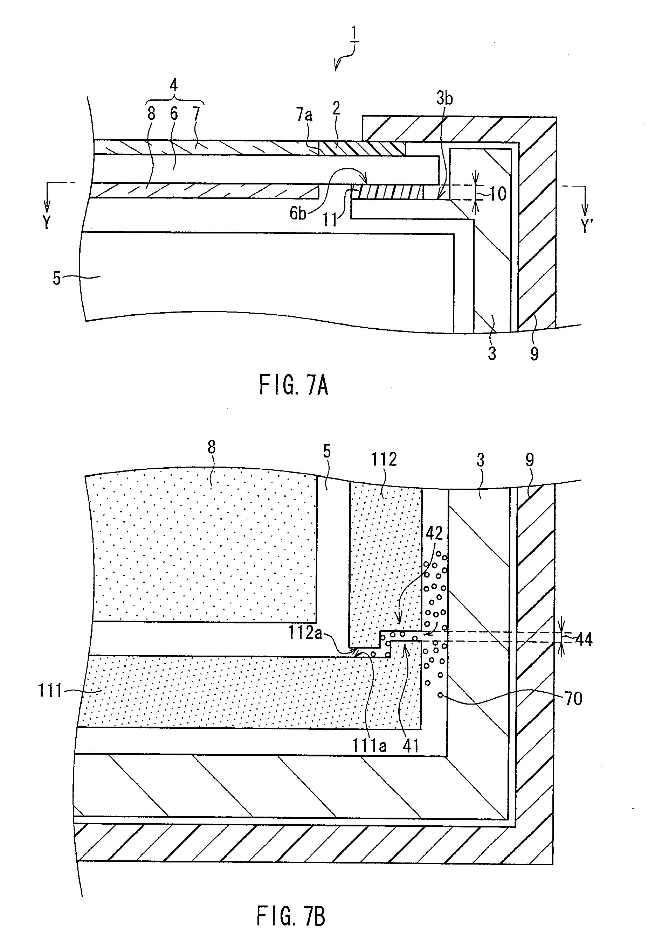

FIG. 7A is a cross-sectional view showing a liquid crystal display device 1 having a liquid crystal display panel 4 incorporated into a frame. As shown in FIG. 7A, the liquid crystal display device 1 holds a liquid crystal display panel 4 in the case 9 and the chassis 3 both of which constitute the frame. Below the liquid crystal display panel 4, a light-emitting member 5 including a diffusion sheet, a backlight and the like is provided. A double-sided adhesive tape 11 is attached in the area between the lower surface 6b of the liquid crystal display panel 4 and the attachment surface 3b of the chassis 3.

FIG. 7B is a cross-sectional view of the liquid crystal display device 1 taken along a line Y-Y' in FIG. 7A. FIG. 7B shows a clearance 44 generated between a convexity 41 formed at an edge 111a of a double-sided adhesive tape strip 111 and a concavity 42 formed at an edge 112a of a double-sided adhesive tape strip 112.

As shown in FIG. 7B, the edge 111a of the double-sided adhesive tape strip 111 and the edge 112a of the double-sided adhesive tape strip 112 are attached so that the convexity 41 and the concavity 42 are engaged with each other. Therefore, a plurality of foreign matters 70 coming from the outside are trapped by the wall surface of the clearance 44 between the double-sided adhesive tape strip 111 and the double-sided adhesive tape strip 112. As a result, it is possible to prevent the foreign matters 70 from entering the space between the liquid crystal display panel 4 and the light-emitting member 5.

When a double-sided adhesive tape 11 made of a light-shielding material is used, it is possible to prevent entrance of foreign matters and also prevent light from leaking from the light-emitting member 5 toward the upper surface of the liquid crystal display panel 4.

As mentioned above, since the edges of double-sided adhesive tape strips are shaped to be engaged with each other in the liquid crystal display device 1 explained in the present embodiment, entrance of foreign matters from the outside of the display panel can be reduced.

### [3. Other embodiments]

### [3-1. Structure of liquid crystal display device]

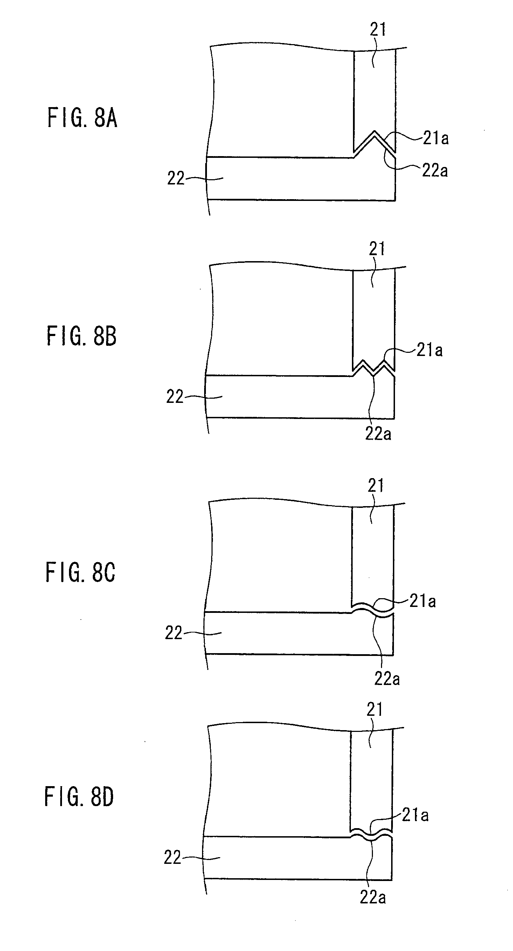

FIGs. 8A-8E show variations of attachment of the light-shield tapes or the double-sided adhesive tapes in the above embodiments.

FIG. 8A shows an example where a trough-shaped concavity 211a is formed at an edge 21a of a tape member 21 and a ridge-shaped convexity 221a is formed at an edge 22a of a tape member 22, and the edge 21a and the edge 22a are engaged with each other.

FIG. 8B shows an example where trough-shaped concavities 211b and 212b are formed at an edge 21b of a tape member 21, ridge-shaped convexities 221b and 222b are formed at an edge 22b of a tape member 22, and the edge 21b and the edge 22b are engaged with each other.

FIG. 8C shows an example where a curved concavity 211c is formed at an edge 21c of a tape member 21, a curved convexity 221c is formed at an edge 22c of a tape member 22, and the edge 21c and the edge 22c are engaged with each other.

FIG. 8D shows an example where a curved concavity 211d is formed at an edge 21d of a tape member 21, a curved convexity 221d is formed at an edge 22d of a tape member 22, and the edge 21d and the edge 22d are engaged with each other.

In the above-mentioned embodiments, a plurality of tape strips of either a light-shield tape or a double-sided adhesive tape are bonded to face each other at inner corners of the perimeter of a liquid crystal display panel 4. Alternatively, the plural tape strips may be bonded facing each other at a part other than the corners inside the perimeter of the liquid crystal display panel 4.

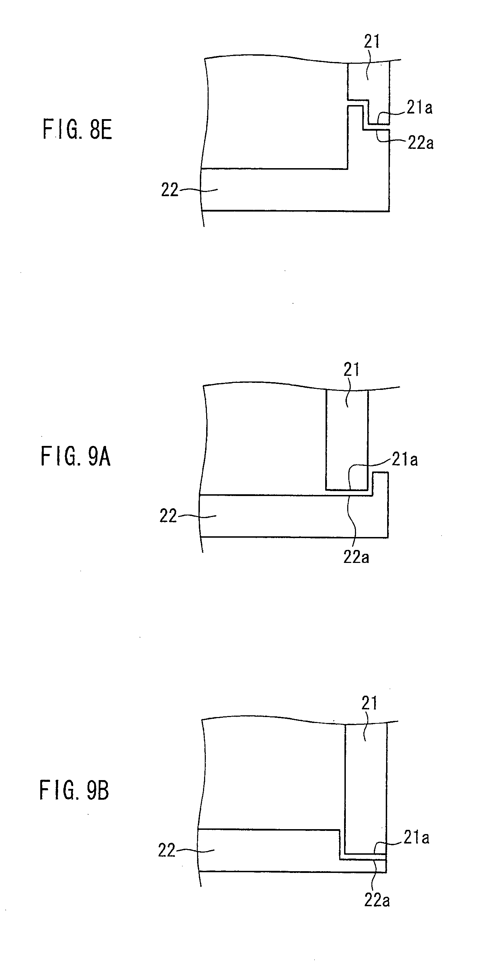

FIG. 8E shows an example where the engagement of the respective edges of tape members is used for a joint of a plurality of tape strips to be attached rectilinearly inside of the perimeter of the liquid crystal display panel 4. In FIG. 8E, an edge 21e of a tape member 21 and an edge 22e of a tape member 22 are engaged with each other at a rectilinear part of the tape strip. The engagements shown in FIGs. 5A-5D or FIGs. 8A-8D may be used for the joints of a plurality of tape strips to be attached rectilinearly as shown in FIG. 8E.

FIGs. 9A and 9B show further variations of attachment of either the light-shield tape or the double-sided adhesive tape of the above-mentioned embodiments. In FIG. 9A, an edge 21f of a tape member 21 is shaped rectilinearly through a conventional slit-processing, only an edge 22f of a tape member 22 is shaped as a convexity, and the respective tape members are engaged with each other. Further in FIG. 9B, an edge 21g of a tape member 21 is shaped rectilinearly through a conventional slit-processing, only an edge 22g of a tape member 22 is shaped as a concavity, and the respective tape members are engaged with each other. In this case, only the end of one of the tape members (e.g., tape member 22) requires processing. Therefore, the cost for processing the tape member can be reduced for example.

### Industrial Applicability

The present invention is useful for a display panel or a display device equipped with a tape member.

### Explanation of Letters and Numerals

- 1: liquid crystal display device
- 2: light-shield tape
- 3: chassis
- 4: liquid crystal display panel
- 5: light-emitting member
- 6: liquid crystal panel
- 7: polarizing plate
- 8: polarizing plate
- 9: case

## Claims

1. A display panel comprising a tape member attached to the inside of a perimeter,
wherein a first edge is formed at a first end of the tape member;
a second edge is formed at a second end of the tape member so as to face the first edge; and
the first edge and the second edge are shaped to be engaged with each other at least partly.

2. The display panel according to claim 1, wherein the first edge protrudes at one part outward to form a convexity and the second edge is notched at one part inward to form a concavity, and the convexity and the concavity are shaped to be engaged with each other.

3. The display panel according to claim 2, wherein the convexity at the first edge and the concavity at the second edge are shaped to be engaged with each other at the entire first edge or at the entire second edge.

4. The display panel according to any one of claims 1 to 3, wherein the first end and the second end are attached so that a clearance generated between the first edge and the second edge is sized to prevent light that has entered from the outside of the display panel from traveling rectilinearly to the interior of the display panel.

5. The display panel according to any one of claims 1 to 4, wherein the display panel is a quadrangle, and the first end and the second end are attached at a corner of the margin of the display panel.

6. The display panel according to any one of claims 1 to 5, wherein the tape member is a double-sided adhesive tape, and the display panel is adhered to a chassis by use of the double-sided adhesive tape.

7. A display device comprising the display panel according to any one of claims 1 to 6.
